# EUROPÄISCHE PATENTANMELDUNG

(11) **EP 3 929 316 A1**
(43) Veröffentlichungstag der Anmeldung: **29.12.2021**
(21) Anmeldenummer: 21180853.0
(22) Anmeldetag: 22.06.2021
(51) Int. Cl.: C22B 21/00, C23F 1/20, C23F 1/46, C25D 11/08, C25D 21/18

(54) **VERFAHREN ZUR REGENERATION EINER ERSCHÖPFTEN, SCHWEFELSÄURE ENTHALTENDEN BEHANDLUNGSLÖSUNG AUS DER ALUMINIUMVEREDELUNG**

(30) Priorität: 22.06.2020 DE 102020116345
(71) Anmelder: Möller Chemie GmbH & Co. KG, 48565 Steinfurt (DE)
(72) Erfinder: Sindermann, Marco, 48565 Steinfurt (DE)
(74) Vertreter: Tarvenkorn, Oliver

(57) **Zusammenfassung**

Verfahren zur Regeneration einer erschöpften, Schwefelsäure enthaltenden Behandlungslösung aus der Aluminiumveredelung, mit wenigstens folgenden Schritten:
a) Bestimmen der Masse der Behandlungslösung und des Gehalts an Aluminium darin;
b) Zugabe von Fluorwasserstoffsäure mit einer Konzentration von mindestens 73% zu der Behandlungslösung, wobei die Fluorwasserstoffsäure im stöchiometrischen Verhältnis zu dem ermittelten Gehalt an Aluminium zugegeben wird;
c) Langsame Zugabe von Natriumhydroxid in Form von Feststoffpartikeln mit einem Durchmesser von 2 mm bis 5 mm unter Rühren bis zur Auflösung, wobei die tatsächlich zugegebene Menge des zugegeben Natriumhydroxids nur 45% bis 55% der stöchiometrisch für eine Kryolith-Verbindung ermittelten Menge beträgt und verteilt über einen Zeitraum von mindestens 10 Minuten zugegeben wird;
d) Abtrennen des Niederschlags.

## Beschreibung

Die Erfindung betrifft ein Verfahren zur Regeneration einer erschöpften, Schwefelsäure enthaltenden Behandlungsflüssigkeit aus der Aluminiumveredelung.

Bei Behandlungslösungen aus der bzw. für die Aluminiumveredelung besteht das Problem, dass die ursprünglich eingesetzte Badlösung, die im Wesentlichen auf Schwelsäure basiert, relativ wenig Wasser beinhaltet und gleichzeitig wenig Aluminium aufnehmen kann. Daher fallen bei der Verwendung große Mengen an Abfall an in Form einer Behandlungsflüssigkeit an, die auf Schwefelsäure basiert und große Mengen an Aluminiumionen enthält.

Die JP 2010-7170 A lehrt ein Verfahren zur Ätzung der Oberfläche eines aluminiumbasierten Gegenstandes, wobei die Oberfläche mit einer Behandlungsflüssigkeit behandelt wird, die eine anorganische Säure umfasst und wobei die Behandlungsflüssigkeit nicht ausgetauscht wird. Der Behandlungsflüssigkeit werden Natriumionen und Fluorionen durch Zugabe eines Alkalimetallsalzes von Fluorwasserstoff, wie z.B. Natriumfluorid, zugegeben. In einem abschließenden Schritt werden Niederschläge, die durch den Zugabeschritt ausgefällt worden sind, entfernt. Die Ausfällung im laufenden Betrieb ist jedoch ungenau, da sich die Zusammensetzung der Behandlungsflüssigkeit während der Regeneration ändert. Im Zweifel müssen die regenerierenden Stoffe stets im Übermaß eingesetzt werden, so dass das Verfahren unwirtschaftlich ist.

Die Aufgabe der Erfindung besteht somit darin, die Wirtschaftlichkeit eines Verfahrens zur Regeneration einer erschöpften, Schwefelsäure enthaltenden Behandlungslösung aus der Aluminiumveredelung zu verbessern.

Diese Aufgabe wird durch ein Verfahren mit den Merkmalen des Anspruchs 1 gelöst.

Nach der Erfindung erfolgt die Aufbereitung vollständig getrennt von dem Aluminiumveredelungsprozess. In regelmäßigen Intervallen wird frische Säure zu der in einem Tauchbecken gespeicherten Badlösung zugegeben. Dabei wird über einen Überlauf die sogenannte "Altsäure", welche die nach dem Verfahren zu regenerierende, in einem vorangegangenen Veredelungsprozess verbrauchte Behandlungsflüssigkeit darstellt, aus dem Becken verdrängt und in einen separaten Behälter überführt. Dadurch kann zunächst die Masse der aufzubereitenden Behandlungsflüssigkeit ebenso bestimmt werden wie der Gehalt an Aluminiumionen darin, woraus wiederum auf die Masse an elementarem Aluminium geschlossen werden kann. Die für die anodischen Aluminiumveredelungsverfahren eingesetzten und somit in der Behandlungsflüssigkeit vorhandenen Säuren, nämlich Schwefelsäure und Phosphorsäure, werden mittels einer Säure-Base-Titration in ihrer Quantität ermittelt. Die Aluminiumkonzentration wird mittels einer komplexometrischen Metalltitration bestimmt.

Überraschenderweise wurde gefunden, dass zur Ausfällung der Aluminiumionen nur etwa 45% bis 55%, im Mittel nur 50% der stöchiometrisch berechneten Menge an Natrium eingesetzt zu werden braucht, wenn in einem ersten Verfahrensschritt Fluorwasserstoff und in einem zweiten Verfahrensschritt Natriumhydroxid zur Behandlungsflüssigkeit gegeben wird, wobei das Natriumhydroxid langsam, nämlich innerhalb von 10 min bis 30 min, und in Form von festem Schüttgut mit einer mittleren Partikelgröße von etwa 3 mm, nämlich mit einem Durchmesser von 2 mm bis 5 mm und insbesondere in Form von kugelförmigen Perlen zugegeben wird. Das feste Natriumhydroxid wird über den genannten Zeitraum verteilt zugegeben und dabei unter ständigem Rühren bis zur Auflösung gebracht. Durch die langsame Zugabe wird der Wärmeeintrag in die zu generierende Lösung reduziert.

Dabei bildet sich im ersten Schritt H₃AlF₆ und im zweiten Schritt ein Niederschlag, der abfiltriert wird. Dieser umfasst mehrere Feststoffe, durch welche Aluminium gebunden wird und der insbesondere Kryolith (Na3AlF6), HNa₂AlF₆ und H₂NaAlF₆ umfasst. Art und Zusammensetzung des Niederschlags sind bisher nicht ermittelt worden, weil die Aufgabe lediglich darin besteht, die Behandlungsflüssigkeit durch Entfernen von Aluminiumionen wieder in eine im Veredelungsprozess einsetzbare Badlösung zurückzuführen.

Bei der Bezeichnung "Aluminiumveredelung" ist zu berücksichtigen, dass Veredelungsverfahren wie Eloxal-Verfahren usw. nicht Halbzeuge aus reinem, sondern aus legiertem Aluminium behandeln, so dass neben Aluminiumionen auch andere Metallionen in der Behandlungslösung vorliegen und zur Bildung z. B. von Komplexen beitragen können, die die Ausfällung der Aluminiumionen in dem erfindungsgemäß beanspruchten, unterstöchiometrischen Verhältnis begünstigen können.

Die Erfindung wird anhand des nachfolgenden Beispiels für ein Verfahren zur Regeneration einer erschöpften, Schwefelsäure enthaltenden Behandlungsflüssigkeit aus der Aluminiumveredelung erläutert.

Eine Badlösung, die zur Behandlung von Aluminium-Blech eingesetzt wurde, besitzt eine Dichte von 1,72 g/cm³ und folgende Zusammensetzung, bezogen auf 1 Liter der Badlösung:
Aluminiumgehalt: Aluminium liegt in Form von Aluminiumsulfat Al₂(SO₄)₃ mit einem Anteil von 253g/l in der Lösung vor, das entspricht 40 g/l reinem Al

| | |
|---|---|
| Schwefelsäure: | 500 g/l |
| Phosphorsäure: | 800 g/l |
| Wasser: | 200 g/l |

Phosphorsäure ist in der Badlösung lediglich als Füllstoff eingesetzt, ohne dass es zu einer Phosphatbildung kommt.

Das erfindungsgemäße Verfahren geht von der Annahme aus, dass das Ausfällen des Aluminiums mit Natriumhydrogenfluorid NaHF₂ zu bewirken ist, so dass die Aluminiumionen als Kryolith Na₃AlF₆, ausgefällt werden.

### Erster Behandlungsschritt:

Die Altsäure mit dem bekannten Aluminium-Gehalt wird vorgelegt. Fluorwasserstoffsäure wird in einer handelsüblichen Konzentration von mindestens 73% zugegeben. Insbesondere wird wasserfreie Fluorwasserstoffsäure zugegeben, wodurch eine Verwässerung der Badlösung durch mehrere aufeinanderfolgende Regenerationszyklen vermieden wird.

Aufgrund der obigen Annahme zur Ausfällungsreaktion werden pro Mol Aluminium 6 Mol Fluorwasserstoffsäure eingesetzt, was in dem beschriebenen Ausführungsbeispiel einem Einsatz von 120 g wasserfreier Fluorwasserstoffsäure oder 165 g Fluorwasserstoffsäure in einer Konzentration von 73% entspricht.

Aufgrund der Molmasse von Aluminium von 27 kg/mol ergeben sich folgende Bilanzen:
Bei 23 g/kg Aluminium in der verbrauchten Behandlungsflüssigkeit mit der Dichte 1,72 g/cm³ in der Altsäure werden 140,5 g an 73%iger Fluorwasserstoffsäure oder 102,5 g an reiner Fluorwasserstoffsäure erforderlich.

Die Zugabe führt zur Bildung des H₃AlF₆-Komplexes, der gut löslich ist, da HF im Sauren eine komplexbildende Säure darstellt. Hierbei entsteht aus dem gelösten Aluminiumsulfat nebenbei auch wieder Schwefelsäure.

Al₂(SO₄)₃ + 12 HF **→** 2 H₃AlF₆, + 3 H₂SO₄

### Zweiter Behandlungsschritt:

Gemäß der Annahme, dass eine Fällung der Aluminiumionen als Kryolith erfolgt, wäre theoretisch folgender Einsatz an Natriumhydroxid erforderlich: 1 Mol Aluminium benötigt stöchiometrisch 3 Mol Natrium; dies entspräche einer Zugabe von 3 Mol NaOH bzw. - auf die Mengen des obigen Beispiels bezogen - 120g NaOH.

Nach der Erfindung wird vorgeschlagen, dass Natriumhydroxid nicht gelöst oder in Pulverform zuzugeben, sondern in Form von Feststoffpartikeln mit makroskopischer Größe, insbesondere in Form von kugelförmigen Perlen mit einem Durchmesser von etwa 3 mm.

Durch diese Maßnahme in der Art und Weise der Zugabe des Natriumhydroxids wurde überraschend gefunden, dass nur circa 50% des obigen, theoretisch ermittelten Werts für die Fällung ausreichend sind, also im Beispiel nur etwa 51 g NaOH. Dieser Wert ergibt sich in dem Beispiel unter Berücksichtigung folgender Werte:
- 40 g/l Aluminium (gelöst im Bad)
- Dichte des Bades 1,72 g/cm³
- Molmasse Aluminium 27 g/mol
da in 1kg der zu regenerierenden Altsäure nur 0,86 mol Aluminium enthalten sind.

Die Natriumhydroxid-Perlen werden langsam unter Rühren zugegeben. Diese lösen sich nur langsam auf, da sich nur an der Grenzfläche zwischen einer Natriumhydroxid-Perle und der Badlösung das "Kryolith" bildet, welches zudem selbst-inhibierend auf den weiteren Auflöseprozess wirkt. Trotzdem wird die Mischung warm. Durch die kontrollierte und langsame Zugabe über einen längeren Zeitraum von mindestens 10 min, besser von etwa 30 min oder länger bleibt die Wärmebildung gut kontrollierbar.

Die bekannte Kryolith-Bildungsreaktion ist:

H₃AlF₆ + 3 NaOH **→** Na₃AlF₆

Der nach der Erfindung vorgesehene unterstöchiometrische Einsatz von Natriumhydroxid, der dennoch eine vollständige Ausfällung der Aluminiumionen bewirkt, ist möglicherweise darauf zurückzuführen, dass aufgrund der sehr hohen Säurekonzentration, die sich in dem Beispiel durch 650 g/l Phosphorsäure und 550 g/l Schwefelsäure ergibt, ein bzw. zwei Natriumatome am Komplex ausreichen. Somit würden sich zwei Verbindungen wie H₂NaAlF₆ und/oder HNa₂AlF₆ zugleich ergeben.

### Dritter Behandlungsschritt:

Der im zweiten Schritt ausfallende Niederschlag wird in bekannter Weise durch Filtrieren o.ä. abgeschieden. Der Filterkuchen enthält ca. 35% Feststoffanteil in Bezug auf die Gesamtmasse des abgetrennten Kuchens. Der Rest von 65% ist aufgeteilt in Säuren und Wasser, wobei 80% Säuren und 20% Wasser sind, also im Verhältnis 1:4 vorliegen.

Zurück bleibt eine direkt wieder für die Aluminiumveredelung einsetzbare, auf Schwefelsäure basierende Badlösung.

### Zusammenfassung:

Ausgehend von 1 kg Altsäure und dem Zusatz von:
- 140,5g HF 73%
- 51,0g NaOH (Perlen)
wird erhalten:
- 360g Phosphorsäure g/kg
- 320g Schwefelsäure g/kg

### Analysedaten des Regenerats:

- Dichteabsenkung durch Wassereintrag HF 73% und durch Bildung von Wasser durch Neutralisation
- Dichte: 1,563 g/ml
- Aluminium: 0,27 g/l
- Schwefelsäure: 490 g/l
- Phosphorsäure: 562 g/l
- 250g Wasser, die aus der Altsäure stammen, zzgl. 27% aus der Fluorwasserstoffsäure (73%) und aus der Neutralisationsreaktion von Fluorwasserstoffsäure mit Natriumhydroxid.

## Patentansprüche

1. Verfahren zur Regeneration einer erschöpften, Schwefelsäure enthaltenden Behandlungslösung aus der Aluminiumveredelung, mit wenigstens folgenden Schritten:
a) Bestimmen der Masse der Behandlungslösung und des Gehalts an Aluminium darin;
b) Zugabe von Fluorwasserstoffsäure mit einer Konzentration von mindestens 73% zu der Behandlungslösung, wobei die Fluorwasserstoffsäure im stöchiometrischen Verhältnis zu dem ermittelten Gehalt an Aluminium zugegeben wird;
c) Langsame Zugabe von Natriumhydroxid in Form von Feststoffpartikeln mit einem Durchmesser von 2 mm bis 5 mm unter Rühren bis zur Auflösung, wobei die tatsächlich zugegebene Menge des zugegeben Natriumhydroxids nur 45% bis 55% der stöchiometrisch für eine Kryolith-Verbindung ermittelten Menge beträgt und verteilt über einen Zeitraum von mindestens 10 Minuten zugegeben wird;
d) Abtrennen des Niederschlags.

2. Verfahren nach Anspruch 1, **dadurch gekennzeichnet, dass** die unterstöchiometrisch festgelegte Menge an Natriumhydroxid in Form von kugelförmigen Perlen mit einem Durchmesser von 2 mm bis 4 mm zugegeben wird.

3. Verfahren nach Anspruch 1 oder 2, **dadurch gekennzeichnet, dass** die die unterstöchiometrisch festgelegte Menge an Natriumhydroxid über einen Zeitraum von 10 min bis 30 min eingerührt wird.

4. Verfahren nach einem der Ansprüche 1 bis 3, **dadurch gekennzeichnet, dass** wasserfreie Fluorwasserstoffsäure zugegeben wird.

5. Verfahren nach einem der Ansprüche 1 bis 4, **dadurch gekennzeichnet, dass** die zuzugebende Menge an Natriumhydroxid auf 50% der stöchiometrisch für eine Kryolith-Verbindung ermittelten Menge festgelegt wird.
